# EUROPEAN PATENT APPLICATION

(11) **EP 4 826 270 A1**
(43) Date of publication of application: **21.10.2026**
(21) Application number: 25170379.9
(22) Date of filing: 14.04.2025
(51) Int. Cl.: F16D 41/22

(54) **FREEWHEEL CLUTCH**

(71) Applicant: Volvo Penta Corporation, 405 08 Göteborg (SE)
(72) Inventor: WIKLUND, Johan, 731 96 Köping (SE); NILSSON, Stefan, 731 42 Köping (SE); IVANSSON, Niclas, 732 98 Arboga (SE)
(74) Representative: Zacco Sweden AB

(57) **Abstract**

A freewheel clutch (1) comprises a first drive shaft (2) and a second drive shaft (3), characterized in that the first drive shaft (2) comprises an essentially axially extending thread or axially extending splines (4) arranged to interact with a corresponding essentially axially extending thread or axially extending splines (5) of the second drive shaft (3), wherein in response to a difference in rotational speed between the first drive shaft (2) and the second drive shaft (3), the first and second drive shaft (3) rotate relative each other along the essentially axially extending thread or axially extending splines (4, 5), thereby causing an axial movement of the first drive shaft (2) and second drive shaft (3) towards or away from each other causing the freewheel clutch (1) to engage or disengage the first drive shaft (2) from the second drive shaft (3).

## Description

### TECHNICAL FIELD

The disclosure relates generally to clutches. In particular aspects, the disclosure relates to a freewheel clutch. The disclosure can be applied to any type of equipment where clutches are used, for example marine vehicles but also heavy-duty vehicles, such as trucks, buses, and construction equipment, among other vehicle types. Although the disclosure may be described with respect to a particular vehicle, the disclosure is not restricted to any particular vehicle.

### BACKGROUND

Clutches are essential components in various mechanical systems, including automotive transmissions, industrial machinery, and other applications requiring controlled power transfer. Traditional clutches often rely on friction plates or other mechanical means to engage and disengage power transmission. However, these systems can suffer from wear and tear, leading to reduced efficiency and increased maintenance requirements.

One commonly used technique in clutches is Sprague clutches, also known as one-way or overrunning clutches. These clutches offer an alternative approach by utilizing a series of sprags (wedges) that engage with the inner and outer races of the clutch. This design allows for smooth and efficient power transfer while minimizing wear and tear on the components. Despite these advantages, existing Sprague clutches may still face challenges related to durability, engagement precision, and overall performance.

Accordingly, there is a need in the art for an improved clutch design that addresses the limitations of existing systems.

### SUMMARY

According to a first aspect of the disclosure, a freewheel clutch comprises a first drive shaft and a second drive shaft. The first drive shaft comprises an essentially axially extending thread or axially extending splines arranged to interact with a corresponding essentially axially extending thread or axially extending splines of the second drive shaft. In response to a difference in rotational speed between the first drive shaft and the second drive shaft, the first and second drive shaft rotate relative each other along the essentially axially extending threads or axially extending splines, thereby causing an axial movement of the first drive shaft and second drive shaft towards or away from each other causing the freewheel clutch to engage or disengage the first drive shaft from the second drive shaft. The first aspect of the disclosure may seek to solve the problem of low durability of previously known freewheel clutches. A technical benefit may include increased durability, leading to more time between maintenances or replacements of the freewheel clutch. Additional benefits can be that the freewheel clutch can provide an increase in transferred torque and that the design of the freewheel clutch can be made more flexible such that it can be adapted to more technical solutions than today's clutches.

Optionally in some examples, including in at least one preferred example, the threads or splines are trapezoidal threads or helical or straight splines. A technical benefit may include that these threads or splines provide the appropriate characteristics for the freewheel clutch. Additionally, threads or splines provide several degrees of freedom when it comes to designing the threads or splines such that the freewheel clutch can have different characteristics depending on the application into which it is installed.

Optionally in some examples, including in at least one preferred example, the clutch comprises a plate clutch section arranged between a first engagement surface of the first drive shaft and a second engagement surface of the second drive shaft, wherein the plate clutch section is arranged to engage or disengage the first drive shaft from the second drive shaft in response to the movement of the first drive shaft and second drive shaft towards or away from each other. A technical benefit may include that the freewheel clutch can be modified for a commonly used type of clutch that will benefit from the use of threads or splines.

Optionally in some examples, including in at least one preferred example, the plate clutch section comprises a plurality of plates. A technical benefit may include that the characteristics of the freewheel clutch can be modified depending on the number of plates in the plate clutch section.

Optionally in some examples, including in at least one preferred example, a resilient element is arranged between the plate clutch section and the first engagement surface of the first drive shaft. A technical benefit may include that this allows for a smooth transition between engagement and disengagement of the first and second drive shafts from each other. The spring characteristics can be changed to achieve a desired transitional characteristic of the freewheel clutch.

Optionally in some examples, including in at least one preferred example, the first drive shaft comprises a female or male cone clutch section and the second drive shaft comprises a male or female cone clutch section arranged on the second drive shaft. The female and male cone clutch sections are arranged to engage or disengage the first drive shaft from the second drive shaft in response to the movement of the first drive shaft and second drive shaft towards or away from each other. A technical benefit may include that the freewheel clutch can be modified for a further commonly used type of clutch that will benefit from the use of threads or splines.

Optionally in some examples, including in at least one preferred example, the first drive shaft comprises a first dog clutch section and the second drive shaft comprises a second dog clutch section, wherein the first and second dog clutch sections are arranged to engage or disengage the first drive shaft from the second drive shaft in response to the movement of the first drive shaft and second drive shaft towards or away from each other. A technical benefit may include that the freewheel clutch can be modified for a further commonly used type of clutch that will benefit from the use of threads or splines.

Optionally in some examples, including in at least one preferred example, the first drive shaft is driven by a combustion engine and the second drive shaft is driven by an electric motor. A technical benefit may include that the freewheel clutch can be used in hybrid drivelines, for instance in marine applications but also in heavy-duty vehicles, such as trucks, buses, and construction equipment, among other vehicle types.

Optionally in some examples, including in at least one preferred example, the first drive shaft is driven by a first electric motor and the second drive shaft is driven by a second electric motor. A technical benefit may include that the freewheel clutch can be used in purely electric drivelines with two electric motors that can be used separately or in tandem, for instance in marine applications but also in heavy-duty vehicles, such as trucks, buses, and construction equipment, among other vehicle types.

According to a second aspect of the disclosure, a vehicle comprises a hybrid driveline comprising a freewheel clutch according to the first aspect. The second aspect of the disclosure may seek to provide a vehicle having a clutch with improved durability and transfer of torque. A technical benefit may include providing vehicles that require less maintenance and/or replacement of parts.

Optionally in some examples, including in at least one preferred example, the vehicle is a construction vehicle, a truck, a bus or a marine vessel. A technical benefit may include reduced costs for end users, both private and professional.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is a cross-sectional view of a freewheel clutch according to a first example embodiment.
**FIG. 2** is a cross-sectional view of a freewheel clutch according to a second example embodiment.

### DETAILED DESCRIPTION

The detailed description set forth below provides information and examples of the disclosed technology with sufficient detail to enable those skilled in the art to practice the disclosure.

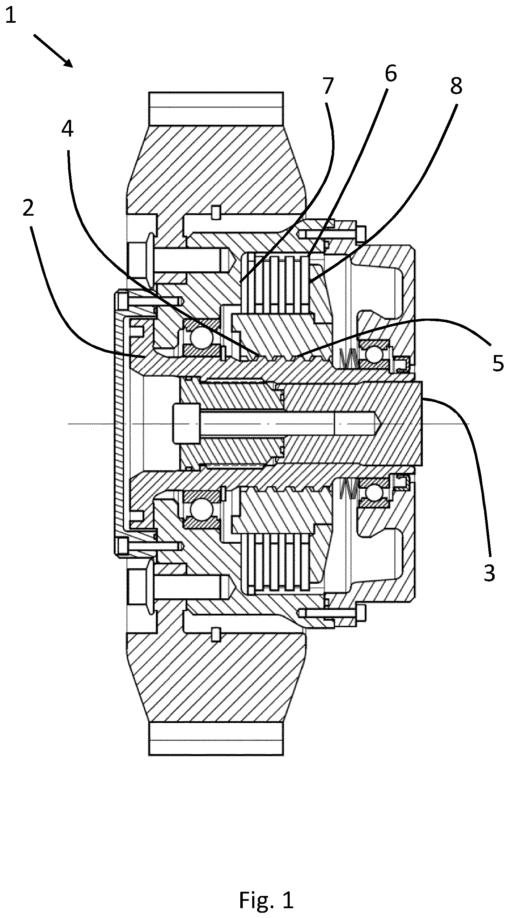

**FIG. 1** is a cross-sectional view of a freewheel clutch 1 according to a first example embodiment. The freewheel clutch 1 comprises a first drive shaft 2 and a second drive shaft 3. The first drive shaft 2 comprises an essentially axially extending thread 4 arranged to interact with a corresponding essentially axially extending thread 5 of the second drive shaft 3. The first drive shaft 2 and second drive shaft 3 are arranged in the freewheel clutch with all necessary components such as bearings, bearing housings, clutch spigot etc. It is assumed that the skilled person would know how to arrange the above-described parts in the clutch, and they are therefore not described in detail. Alternatively, the first and second drive shafts 2, 3 may comprise splines arranged to interact in a similar way as the threads.

The freewheel clutch operates such that when a difference in rotational speed between the first drive shaft 2 and the second drive shaft 3 arises, either from one of the drive shafts not rotating while the other is rotating or from one drive shaft rotating with a different rotational speed from the other drive shaft, the first and second drive shafts 2, 3 will rotate relative each other along the essentially axially extending thread 4, 5. This relative rotation causes an axial movement of the first drive shaft 2 relative to the second drive shaft 3 towards or away from each other causing the freewheel clutch 1 to engage or disengage the first drive shaft 2 from the second drive shaft 3.

The threads 4, 5 are trapezoidal threads or helical splines. By varying the pitch, thread angles and thread height, the characteristic of the thread can be adapted to perform differently depending on the application that the freewheel clutch is installed in. For instance, varying the parameters will result in variations in the difference in rotational speed when the relative axial movement starts and how quickly the first and second drive shafts 2, 3 will engage or disengage. Further, a higher pitch will result in a smaller engagement force in the clutch section and vice versa.

If splines are used, straight-sided splines, involute splines or serrated splines can be used. Straight-sided splines are simple and cost-effective and are suitable for applications where precise alignment is not critical. Involute splines provide better load distribution and can be used in high-torque applications like automotive transmissions. Serrated splines offer a high degree of precision and can be used in aerospace and robotics applications.

In the first example embodiment of figure 1, the freewheel clutch 1 comprises a plate clutch section 6 arranged between a first engagement surface 7 of the first drive shaft 2 and a second engagement surface 8 of the second drive shaft 3. The plate clutch section 6 is arranged to engage or disengage the first drive shaft 2 from the second drive shaft 3 in response to the movement of the first drive shaft 2 and second drive shaft 3 towards or away from each other.

The first engagement surface 7 of the first drive shaft 2 can for instance be on a bearing house that the first drive shaft is attached to and the second engagement surface 8 can for instance be on a hub plate that the second drive shaft 3 is attached to.

The plate clutch section 6 may comprise one plate, or as is shown in the example embodiment, a plurality of plates. The number of plates determines the characteristics of the freewheel clutch.

A resilient element (not shown) may be arranged between the plate clutch section 6 and the first engagement surface of the first drive shaft 2 in order to obtain a smooth transition when engaging or disengaging the clutch.

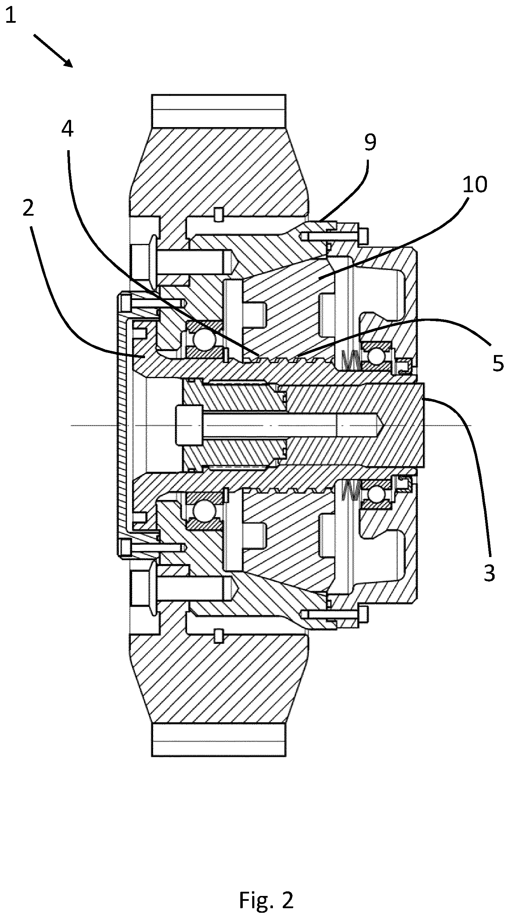

**FIG. 2** is a cross-sectional view of a freewheel clutch according to a second example embodiment. In the second example embodiment, the first drive shaft 2 comprises a female cone clutch section 9 and the second drive shaft 3 comprises a male cone clutch section. The female and male cone clutch sections 8, 9 are arranged to engage or disengage the first drive shaft 2 from the second drive shaft 3 in response to the movement of the first drive shaft 2 and second drive shaft 3 towards or away from each other.

As an alternative to the first and second example embodiments, the first drive shaft may comprise a first dog clutch section and the second drive shaft may comprise a second dog clutch section. In the same way as described above, the first and second dog clutch sections are arranged to engage or disengage the first drive shaft from the second drive shaft in response to the movement of the first drive shaft and second drive shaft towards or away from each other.

As a first non-limiting example of an application for the freewheel clutch, the freewheel clutch can be arranged in a hybrid powertrain with the first drive shaft 2 connected to a internal combustion engine (ICE) and the second drive shaft connected to an electric motor. If the ICE starts, the first and second drive shaft will move axially towards each other from the difference in rotational speed as the second drive shaft does not rotate. In this case, the ICE drives the electric motor and transmission.

If only the electric motor is used and the freewheel clutch is engaged, the first and second drive shaft will move axially away from each other from the difference in rotational speed as the first drive shaft does not rotate. In this case, the electric motor drives the transmission.

If both the ICE and the electric motor are used simultaneously, the ICE needs to provide more torque than the electric motor to keep the freewheel clutch engaged as the difference in rotational speed will ensure that the first and second drive shafts will not move away from each other and disengage the freewheel clutch.

In a second non-limiting example, instead of an ICE and an electric motor, a first electric motor connected to the first drive shaft 2 and a second electric motor connected to the second drive shaft 3 can be used. The above-described conditions apply for when only the first electric motor, only the second electric motor or both electric motors run.

One advantage with the freewheel clutch of the described embodiments is that it does not require any external control system to function. Once the desired parameters for the freewheel clutch are set, the freewheel clutch will function based only on the difference in rotational speed between the first and second drive shafts 2, 3.

A further advantage is that the freewheel clutch of the described embodiments is scalable and adaptable in its design such that it can be suitable for a number of different applications as mentioned in the above description. Even though the example embodiments are described in the context of engines or motors, it is also possible to use the freewheel clutch in applications where the drive shafts are driven by other means.

Example 1: A freewheel clutch comprising a first drive shaft and a second drive shaft, characterized in that the first drive shaft comprises an essentially axially extending thread or axially extending splines arranged to interact with a corresponding essentially axially extending thread or axially extending splines of the second drive shaft, wherein in response to a difference in rotational speed between the first drive shaft and the second drive shaft, the first and second drive shaft rotate relative each other along the essentially axially extending threads or axially extending splines, thereby causing an axial movement of the first drive shaft and second drive shaft towards or away from each other causing the freewheel clutch to engage or disengage the first drive shaft from the second drive shaft.

Example 2: The freewheel clutch according to example 1, wherein the threads or splines are trapezoidal threads or helical or straight splines.

Example 3: The freewheel clutch according to example 1 or 2, wherein the clutch comprises a plate clutch section arranged between a first engagement surface of the first drive shaft and a second engagement surface of the second drive shaft, wherein the plate clutch section is arranged to engage or disengage the first drive shaft from the second drive shaft in response to the movement of the first drive shaft and second drive shaft towards or away from each other.

Example 4: The freewheel clutch according to example 3, wherein the plate clutch section comprises a plurality of plates.

Example 5: The freewheel clutch according to example 3 or 4, wherein a resilient element is arranged between the plate clutch section and the first engagement surface of the first drive shaft.

Example 6: The freewheel clutch according to example 1 or 2, wherein the first drive shaft comprises a female or male cone clutch section and the second drive shaft comprises a male or female cone clutch section arranged on the second drive shaft, wherein the female and male cone clutch sections are arranged to engage or disengage the first drive shaft from the second drive shaft in response to the movement of the first drive shaft and second drive shaft towards or away from each other.

Example 7: The freewheel clutch according to example 1 or 2, wherein the first drive shaft comprises a first dog clutch section and the second drive shaft comprises a second dog clutch section, wherein the first and second dog clutch sections are arranged to engage or disengage the first drive shaft from the second drive shaft in response to the movement of the first drive shaft and second drive shaft towards or away from each other.

Example 8: The freewheel clutch according to any one of the preceding examples, wherein the first drive shaft is driven by a combustion engine and the second drive shaft is driven by an electric motor.

Example 9: The freewheel clutch according to any one of the preceding examples 1-7, wherein the first drive shaft is driven by a first electric motor and the second drive shaft is driven by a second electric motor.

Example 10: A vehicle comprising a hybrid driveline comprising a freewheel clutch according to any one of the preceding examples.

Example 11: The vehicle according to example 10, wherein the vehicle is a construction vehicle, a truck, a bus or a marine vessel.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A freewheel clutch (1) comprising a first drive shaft (2) and a second drive shaft (3), **characterized in that** the first drive shaft (2) comprises an essentially axially extending thread or axially extending splines (4) arranged to interact with a corresponding essentially axially extending thread or axially extending splines (5) of the second drive shaft (3), wherein in response to a difference in rotational speed between the first drive shaft (2) and the second drive shaft (3), the first and second drive shaft (3) rotate relative each other along the essentially axially extending threads or axially extending splines, thereby causing an axial movement of the first drive shaft (2) and second drive shaft (3) towards or away from each other causing the freewheel clutch (1) to engage or disengage the first drive shaft (2) from the second drive shaft (3).

2. The freewheel clutch (1) according to claim 1, wherein the threads or splines (4, 5) are trapezoidal threads or helical or straight splines.

3. The freewheel clutch (1) according to claim 1 or 2, wherein the clutch (1) comprises a plate clutch section (6) arranged between a first engagement surface (7) of the first drive shaft (2) and a second engagement surface (8) of the second drive shaft (3), wherein the plate clutch section (6) is arranged to engage or disengage the first drive shaft (2) from the second drive shaft (3) in response to the movement of the first drive shaft (2) and second drive shaft (3) towards or away from each other.

4. The freewheel clutch (1) according to claim 3, wherein the plate clutch section (6) comprises a plurality of plates.

5. The freewheel clutch (1) according to claim 3 or 4, wherein a resilient element is arranged between the plate clutch section (6) and the first engagement surface of the first drive shaft (2).

6. The freewheel clutch (1) according to claim 1 or 2, wherein the first drive shaft (2) comprises a female or male cone clutch section (9) and the second drive shaft (3) comprises a male or female cone clutch section arranged on the second drive shaft (3), wherein the female and male cone clutch sections are arranged to engage or disengage the first drive shaft (2) from the second drive shaft (3) in response to the movement of the first drive shaft (2) and second drive shaft (3) towards or away from each other.

7. The freewheel clutch (1) according to claim 1 or 2, wherein the first drive shaft (2) comprises a first dog clutch section and the second drive shaft (3) comprises a second dog clutch section, wherein the first and second dog clutch sections are arranged to engage or disengage the first drive shaft (2) from the second drive shaft (3) in response to the movement of the first drive shaft (2) and second drive shaft (3) towards or away from each other.

8. The freewheel clutch (1) according to any one of the preceding claims, wherein the first drive shaft (2) is driven by a combustion engine and the second drive shaft (3) is driven by an electric motor.

9. The freewheel clutch (1) according to any one of the preceding claims 1-7, wherein the first drive shaft (2) is driven by a first electric motor and the second drive shaft (3) is driven by a second electric motor.

10. A vehicle comprising a hybrid driveline comprising a freewheel clutch (1) according to any one of the preceding claims.

11. The vehicle according to claim 10, wherein the vehicle is a construction vehicle, a truck, a bus or a marine vessel.
